# FASCICULE DE BREVET EUROPEEN

(11) **EP 0 971 171 B1**
(45) Date de publication et mention de la délivrance du brevet: **06.08.2003**
(21) Numéro de dépôt: 99401618.6
(22) Date de dépôt: 29.06.1999
(51) Int. Cl.: F23N 5/00, F23L 7/00

(54) **Procédé de combustion d'un combustible avec un comburant riche en oxygène**
Verbrennunungsverfahren eines Brennstoffes mit einem sauerstoffreichen Oxidationsmittel
Combustion method of a combustible with a combustive rich in oxygen

(30) Priorité: 08.07.1998 FR 9808742
(43) Date de publication de la demande: 12.01.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Hibon, Isabelle, 78150 Le Chesnay (FR); Simon, Jean-François, 94300 Vincennes (FR)
(74) Mandataire: Vesin, Jacques

(56) Documents cités:
- DE-A- 4 336 174
- US-A- 4 861 262
- US-A- 5 520 123
- US-A- 5 762 008
- PATENT ABSTRACTS OF JAPAN vol. 014, no. 450 (M-1030), 27 septembre 1990 (1990-09-27) & JP 02 178513 A (MITSUBISHI HEAVY IND LTD;OTHERS: 01), 11 juillet 1990 (1990-07-11)
- PATENT ABSTRACTS OF JAPAN vol. 011, no. 135 (M-585), 28 avril 1987 (1987-04-28) & JP 61 276624 A (SUMITOMO METAL IND LTD), 6 décembre 1986 (1986-12-06)
- PATENT ABSTRACTS OF JAPAN vol. 015, no. 264 (M-1132), 4 juillet 1991 (1991-07-04) & JP 03 087513 A (NGK INSULATORS LTD;OTHERS: 01), 12 avril 1991 (1991-04-12)

## Description

L'invention est relative à un procédé de combustion d'un combustible avec un comburant dont la teneur en oxygène est supérieure à 25 % en moles, dans une chambre de combustion, dans lequel, de façon cyclique :
- on mesure au moins une variable principale représentative de la combustion dans ladite chambre de combustion,
- en fonction du résultat de mesure de ladite au moins une variable principale, on détermine un ordre de commande de régulation des débits de combustible et de comburant à injecter dans ladite chambre de combustion, et
- on applique ledit ordre de commande de régulation pour faire brûler le combustible avec comburant dans ladite chambre de combustion.

De nombreux procédés industriels sont basés sur la combustion de divers combustibles tels que le gaz naturel, le propane, le fioul, etc.. Parmi ces procédés, on peut citer en particulier des procédés d'incinération de déchets ou de fusion de verre dans un four.

Classiquement, pour la mise en oeuvre des procédés de combustion dans ces fours, on utilise comme comburant de l'air. On parle alors d'une "combustion à air".

Pour des fours à verre, des fours rotatifs, ou des fours d'incinération fonctionnant avec de l'air comme comburant, on connaît divers procédés de régulation de la combustion. Il s'agit généralement de procédés dans lesquels on mesure une ou deux variables liées directement à la combustion comme par exemple une température de voûte et / ou la teneur en oxygène des fumées en sortie du four, et on applique une loi de commande empirique prenant en compte les résultats de mesure pour réguler les quantités de combustible et d'air injectées dans le four pour entretenir la combustion.

Récemment, pour d'une part pouvoir respecter les contraintes concernant les nouvelles normes sur l'émission par exemple d'oxydes d'azotes ou de monoxyde de carbone en sortie du four. et d'autre part augmenter la puissance de tels fours, les opérateurs des fours utilisent de plus en plus comme comburant de l'air enrichi d'oxygène ou de l'oxygène pratiquement pur (c'est-à-dire ayant une teneur en oxygène supérieure à 90% en moles) au lieu de l'air. Dans ce cas, on parle d'une "oxy-combustion".

Cependant, la Demanderesse s'est aperçue que les procédés classiques susmentionnés ne permettent pas d'assurer une régulation satisfaisante d'une oxy-combustion. En effet, plus la teneur en oxygène du comburant s'écarte d'une teneur en oxygène de 25 % en moles, c'est-à-dire plus on se rapproche d'une combustion dite "tout oxygène" (c'est-à-dire une combustion utilisant comme comburant de l'oxygène pratiquement pur), plus la régulation classique devient insatisfaisante.

En effet, la Demanderesse a constaté que la régulation d'une oxy-combustion est plus délicate que celle d'une combustion à air du fait de l'apparition de nouveaux paramètres ayant une influence non négligeable sur la combustion.

Ainsi par exemple, elle a trouvé que dans le cas d'une oxy-combustion, les fluctuations de la teneur en oxygène du comburant ont un impact non négligeable sur la puissance de la combustion, c'est-à-dire la quantité de chaleur dégagée par la flamme.

De plus, étant donné que dans le cas d'une combustion à l'oxygène pratiquement pur, le volume des fumées est divisé par un facteur cinq environ par rapport au volume des fumées d'une combustion à air, la Demanderesse a trouvé que les entrées parasites d'air dans un four peuvent fortement perturber l'oxy-combustion et augmenter l'émission des oxydes d'azote.

En outre, le fait que la température des flammes d'une oxy-combustion est généralement plus élevée que celles des flammes d'une combustion à air peut accélérer l'usure du revêtement en matériau réfractaire des parois internes du four selon la nature du matériau en fusion.

Il est connu de US-A-5 520 123, un système de contrôle de l'injection de l'oxygène pour la postcombustion qui minimise les émissions de polluants dans un incinérateur tout en minimisant la consommation d'oxygène. Le régulateur est à base de logique floue, il utilise en entrée les mesures de CO pour ajuster l'injection d'O₂.

Les entrées du régulateur sont donc la mesure du CO, des polluants en sortie de four et la mesure de la température et le pourcentage d'O₂ dans l'atmosphère de combustion, tandis qu'en sortie du régulateur on trouve la consigne du ratio et du temps d'injection de l'oxygène.

L'invention vise donc à prendre en compte ces observations de la Demanderesse afin d'obtenir une régulation plus satisfaisante de l'oxy-combustion dans un four.

A cet effet, l'invention a pour objet un procédé de combustion d'un combustible avec un comburant dont la teneur en oxygène est supérieure à 25 % en moles, dans une chambre de combustion, dans lequel, de façon cyclique :
- on mesure au moins une variable principale représentative de la combustion dans ladite chambre de combustion,
- en fonction du résultat de mesure de ladite au moins une variable principale, on détermine un ordre de commande de régulation des débits de combustible et de comburant à injecter dans ladite chambre de combustion, et
- on applique ledit ordre de commande de régulation pour faire brûler le combustible avec le comburant dans ladite chambre,
caractérisé en ce que
- on mesure en outre au moins une variable secondaire associée à une contrainte de fonctionnement de ladite chambre de combustion ou à une perturbation dans le fonctionnement de celle-ci, et
- pour la détermination dudit ordre de commands de régulation, on prend également en compte le résultat de mesure de ladite au moins une variable secondaire.

Le procédé selon l'invention peut de plus comporter une ou plusieurs des caractéristiques suivantes :
- ladite au moins une variable associée à une contrainte de fonctionnement de ladite chambre est une variable du groupe suivant : la teneur en oxydes d'azote des fumées en sortie de la chambre de combustion, la teneur en monoxyde de carbone des fumées en sortie de la chambre de combustion et une température de paroi de ladite chambre de combustion,
- ladite au moins une variable associée à une perturbation de fonctionnement de ladite chambre de combustion est une variable du groupe suivant : la teneur en azote du combustible, la teneur en oxygène du comburant et l'état de fonctionnement d'au moins un brûleur de ladite chambre de combustion,
- on mesure plusieurs variables secondaires associées à des contraintes de fonctionnement de ladite chambre de combustion et/ou à des perturbations dans le fonctionnement de celle-ci, et, pour la détermination dudit ordre de commande de régulation, on prend en compte le résultat de mesure de chaque variable secondaire,
- l'ordre de commande de régulation est déterminé par un régulateur à logique floue mettant en oeuvre les étapes consistant à :

- convertir chaque variable principale ou secondaire en vue d'établir son degré d'appartenance à au moins un état d'une variable floue,
- appliquer des règles préétablies entre au moins un état d'une première variable floue et un état d'une seconde variable floue pour déterminer un ordre de commande de régulation des débits de combustible et de comburant à injecter dans ladite chambre de combustion, et
- appliquer ledit ordre de commande de régulation pour faire brûler le combustible avec le comburant dans ladite chambre,
- les variables floues d'entrée sont établies à partir de courbes définies sur tout l'univers de discours des variables principales et secondaires.

D'autres caractéristiques et avantages de l'invention ressortiront de la description suivante, donnée à titre d'exemple, sans caractère limitatif, en regard des dessins annexés sur lesquels :
La figure 1 est une vue schématique d'un four mettant en oeuvre le procédé selon l'invention; et
La figure 2 montre un graphique pour illustrer la conversion d'une variable principale en vue d'établir son degré d'appartenance à un ou plusieurs états d'une variable floue associée.

### I. Exemple de la structure d'un four permettant la mise en oeuvre du procédé selon l'invention

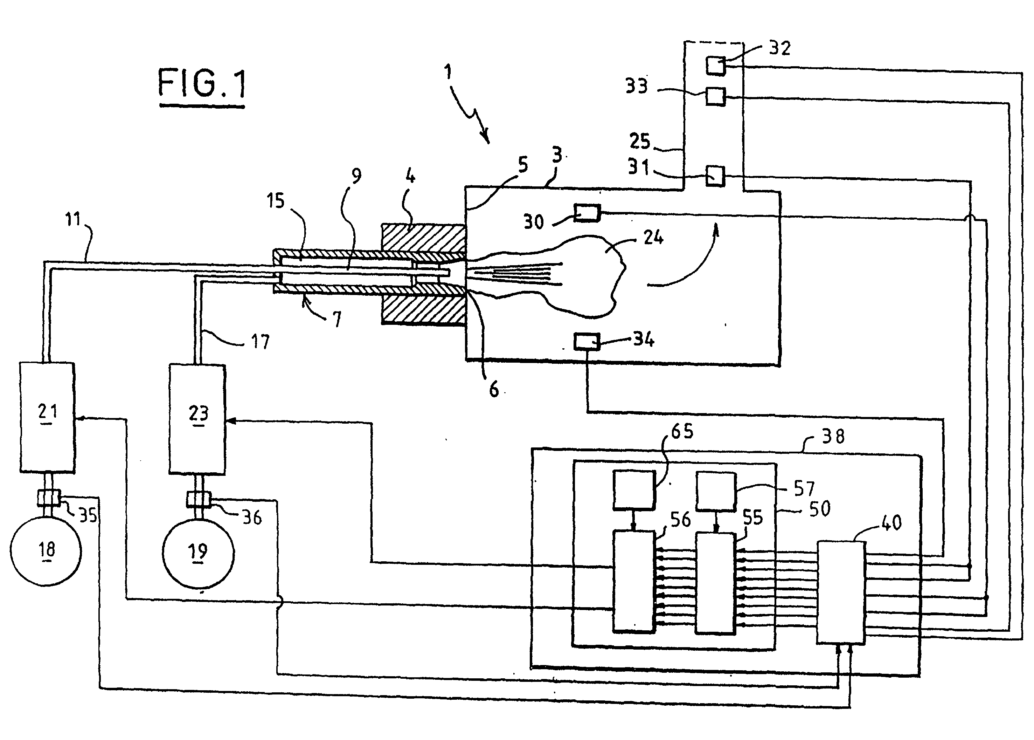

La figure 1 représente schématiquement un four 1 tel qu'un four de fusion de verre ou un four d'incinération de déchets. Ce four 1 comprend une chambre 3 de combustion qui présente dans une paroi latérale 5 une ouverture 6. Au niveau de cette ouverture 6 et contre la paroi latérale 5 est fixé un bloc 4 en un matériau réfractaire dans lequel est monté un "oxy-brûleur" 7, c'est-à-dire un brûleur acceptant un comburant dont la teneur en oxygène est supérieure à 25% en moles, voire pratiquement 100%.

Le brûleur 7 comprend un conduit central 9 relié via une canalisation d'alimentation 11 à une source 13 d'un combustible, comme par exemple du gaz naturel, du fioul, du propane etc.., et un conduit annulaire périphérique 15 relié via une canalisation d'alimentation 17 à une source 19 d'un comburant dont la teneur en oxygène est supérieure à 25% en moles. Cette source peut par exemple être formée d'un simple réservoir sous pression contenant de l'air enrichi d'oxygène ou de l'oxygène pratiquement pur, d'une unité d'enrichissement de l'air avec de l'oxygène, ou encore, de préférence, d'une unité de production d'oxygène sur site.

Dans la canalisation 11 est disposé un débitmètre 21 pour régler le débit du combustible alimentant le brûleur 7 et dans la canalisation 17 est disposé un débitmètre 23 pour régler le débit du comburant.

Le combustible brûle en présence du comburant dans une zone 24 de combustion de la chambre 3.

Les fumées issues de la combustion sont évacuées via un conduit 25 de sortie.

En outre, le four comprend divers capteurs 30, 31, 32, 33, 34, 35 et 36 de mesure qui seront détaillés ci-après. Ces capteurs 30 à 36 sont reliés à une unité centrale 38 destinée d'une part à traiter les signaux relevés par les différents capteurs 30 à 36, et d'autre part à déterminer un ordre de commande pour les débitmètres 21 et 23 et à appliquer cet ordre afin de réguler les débits de combustible et de comburant à injecter dans ladite chambre de combustion 3.

Parmi les différents capteurs, on compte des capteurs 30 et 31. de mesure de variables principales représentatives de la combustion dans ladite chambre de combustion 3, et des capteurs 32 à 36 de variables secondaires associées à une contrainte de fonctionnement de la chambre de combustion 3 ou à une perturbation dans le fonctionnement de celle-ci.

Par "variables principales représentatives de la combustion dans ladite chambre de combustion 3", on comprend des variables permettant de qualifier la combustion dans son effet premier, c'est-à-dire l'échauffement du four. De telles variables sont par exemple la température de voûte mesurée par le capteur 30 ou la teneur en oxygène des fumées en sortie du four mesurée par le capteur 31.

Par "variable secondaire associée à une contrainte de fonctionnement de ladite chambre 3", on comprend par exemple des variables ou grandeurs physiques soumises à des normes de la législation d'un pays comme par exemple la teneur en oxydes d'azote NOₓ ou en monoxyde de carbone CO des fumées en sortie du four, mesurées respectivement par les capteurs 32 et 33. Dans ce groupe de variables secondaires, on inclut également celles dont par exemple le dépassement d'un certain seuil peut endommager ou accélérer l'usure de la structure du four 1, comme par exemple une température de paroi du four mesurée par le capteur 34.

Par "variable secondaire associée à une perturbation dans le fonctionnement de la chambre de combustion 3", on comprend des variables ou grandeurs physiques qui affectent la combustion dans la chambre 3 sans être directement liées à la régulation des débits du combustible et du comburant par les débitmètres 21 et 23, comme par exemple la teneur en azote du combustible mesurée par le capteur 35 ou la teneur en oxygène du comburant mesurée par le capteur 36. Une telle variable secondaire peut également représenter un état de fonctionnement du brûleur 7 ou, si la chambre de combustion est équipée de plusieurs brûleurs, l'état de fonctionnement de chaque brûleur afin de pouvoir couper l'alimentation d'un brûleur défaillant.

Tous les signaux relevés par les capteurs 30 à 36 et correspondant chacun à des valeurs des variables principales et secondaires sont introduits dans l'unité centrale 38, plus particulièrement dans des moyens 40 de traitement des signaux des capteurs 30 à 36.

Dans ces moyens 40, les signaux en provenance des capteurs 30 à 36 sont traités de manière classique, c'est-à-dire ils sont par exemple amplifiés, lissés et numérisés.

De plus, ces moyens 40 peuvent traiter les signaux de manière à déterminer d'autres variables principales et secondaires qui sont intéressantes pour affiner la régulation du four 1.

Ainsi, les moyens 40 déterminent par exemple d'une part une variable appelée "eO₂" qui représente l'écart entre la teneur en oxygène des fumées en sortie du four, mesurée par le capteur 31 et une valeur de consigne, et d'autre part une variable appelée "dO₂" qui représente la variation par unité de temps de la teneur en oxygène des fumées en sortie du four.

Les signaux ainsi traités et correspondant chacun soit à la valeur d'une variable principale, soit à la valeur d'une variable secondaire, sont introduits dans un régulateur 50 à logique floue de l'unité centrale 38. Ce régulateur 50 à logique floue comprend des moyens 55 de conversion de chacune de ces variables principales et secondaires en vue d'établir son degré d'appartenance à au moins un état d'une variable floue associée et des. moyens 56 d'application de règles mémorisées pour la détermination d'un ordre de commande et l'application de celui-ci aux débitmètres 21 et 23.

La conversion qui sera expliquée plus en détail ci-après, est réalisée à partir de courbes continues définies sur tout l'univers de discours des variables principales et secondaires, et mémorisées dans une base de données 57 reliée aux moyens de conversion 55.

Les règles pour l'application de la logique floue sont déterminées de façon empirique et mémorisées dans une mémoire 65 formant une base de connaissances.

Avantageusement, l'unité de commande 38 est principalement constituée d'un ordinateur comportant des interfaces adaptées pour acquérir les signaux des capteurs 30 à 36, et chargé de programmes adaptés pour traiter et exploiter ces signaux.

### II. Fonctionnement du four et mise en oeuvre du procédé selon l'invention

On expliquera ci après le fonctionnement du four 1 en exposant en détail d'une part les diverses étapes du procédé selon l'invention et en particulier la mise en oeuvre de l'application des règles aux variables floues par le régulateur à logique floue 50.

Bien entendu, le procédé s'applique de façon cyclique, un cycle comprenant les étapes de mesure des variables principales et secondaires, leur traitement et conversion et la détermination et l'application d'un ordre de commande.

### II. 1 Conversion des variables principales et secondaires pour établir leurs degrés d'appartenance à des états de variables floues

A titre d'exemple, on explique ci-après en détail la conversion d'une variable principale, l'écart eO₂ entre la teneur en oxygène des fumées en sortie du four mesurée par le capteur 31 et une valeur de consigne, pour établir son degré d'appartenance à un ou plusieurs états d'une variable floue associée, appelée eO₂^{*f*}. Cette procédure de conversion s'applique de manière analogue à toutes les autres variables, aussi bien principales que secondaires, à prendre en compte pour l'application, selon la logique floue, de règles préétablies détaillées ci-après.

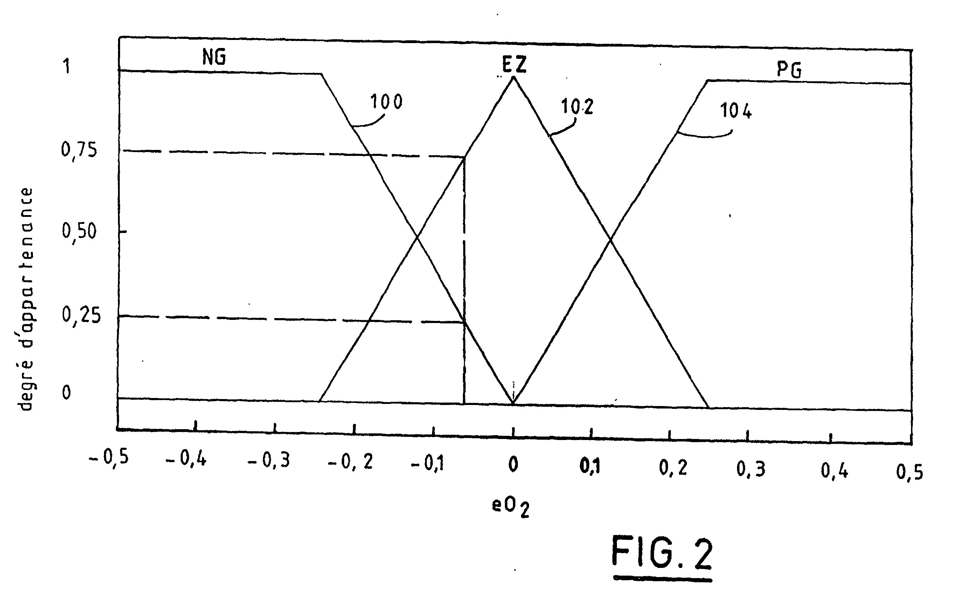

Sur la figure 2 est représenté un graphique montrant en abscisses l'univers de discours de eO₂ et en ordonnées les valeurs d'appartenance d'états de la variable floue eO₂^{*f*} associée.

Comme on le voit sur la figure, la variable floue eO₂^{*f*} peut prendre trois états, à savoir les états appelés "NG" (= négatif grand), "EZ" (= environ zéro), et "PG" (= positif grand).

A chaque état de eO₂^{*f*} est associée une courbe continue 100, 102 et 104 permettant d'établir le degré d'appartenance d'une valeur de eO₂ à un ou plusieurs états de la variable floue eO₂^{*f*}.

Ainsi par exemple, la courbe 100 est associée à l'état "NG" et présente la forme d'un plateau suivi d'une pente négative. La courbe 102 est associée à l'état "EZ" et présente une forme triangulaire, et la courbe 104 est associée à l'état "PG" et présente une pente positive suivie d'un plateau.

La forme des courbes 100, 102 et 104 est définie de façon empirique d'après des essais sur des fours. On note que les plateaux aux extrémités de l'univers de discours des variables physiques sont généralement retenus.

En outre, les valeurs en ordonnées des courbes 100, 102, et 104 sont comprises entre zéro (0) et un (1).

Par ailleurs, il est important à noter que les diverses courbes 100, 102 et 104 se chevauchent de sorte qu'une valeur de eO₂ peut appartenir à deux états différents de eO₂^{*f*}.

Ainsi par exemple la valeur eO₂ = -0,06 appartient à
- un état "NG" de la variable floue eO₂^{*f*} avec un degré d'appartenance de 0,25, et
- un état "EZ" de la variable floue eO₂^{*f*} avec un degré d'appartenance de 0,75.
Ceci est également représenté sur la figure 2.

Les autres variables sont converties par les moyens 55 de conversion selon le même principe.

### II.2 Application de règles selon la logique floue

Les degrés d'appartenance des états respectifs des variables floues sont introduits dans des moyens 56 d'application de règles mémorisées dans la mémoire 65 formant une base de connaissances. Ces règles sont définies de façon empirique à partir d'essais sur des fours.

Chaque règle fait intervenir au moins deux variables floues différentes dont au moins une première est associée à une variable principale et dont au moins une seconde est associée à une variable secondaire.

L'application des règles permet d'obtenir un ordre de commande de régulation appelé "dn" à appliquer aux débitmètres 21 et 23 pour la régulation du four 1.

"dn" représente une variation du facteur stoechiométrique (également appelé rapport d'équivalence) entre le combustible et le comburant qui doit être appliquée à la régulation des débitmètres 21 et 23 pour obtenir un fonctionnement optimisé du four. Cette variation du facteur stoechiométrique "dn" peut prendre trois états : "NG", "EZ" ou "PG" correspondant respectivement à une diminution, un maintien et une augmentation du rapport stoechiométrique.

A titre d'exemple, on indique ci-après un jeu simplifié de quatorze règles pour trois variables floues : la variable floue susmentionnée eO₂^{*f*} et la variable floue dO₂^{*f*} associées respectivement à des variables principales et la variable floue NOx associée à une variable secondaire.

La variable floue dO₂^{*f*} est obtenue à partir de la variation par unité de temps de la teneur en oxygène des fumées en sortie de four "dO₂". dO₂^{*f*} peut également prendre trois états, à savoir les états appelés "NG", "EZ" et "PG".

La variable floue NOx ne peut prendre que deux états : "acceptable" ou "non acceptable", en fonction du fait si la teneur des fumées en sortie du four en oxydes d'azotes mesurée par le capteur 32 dépasse ou non un certain seuil défini par exemple par une norme légale.

| N° | eO₂^{*f*} | dO₂^{*f*} | NOx | → | dn |
|---|---|---|---|---|---|
| 1 | NG | PG | acceptable | | EZ |
| 2 | EZ | PG | acceptable | | PG |
| 3 | PG | PG | acceptable | | PG |
| 4 | NG | EZ | acceptable | | NG |
| 5 | EZ | EZ | acceptable | | EZ |
| 6 | PG | EZ | acceptable | | PG |
| 7 | NG | NG | acceptable | | NG |
| 8 | EZ | NG | acceptable | | NG |
| 9 | PG | NG | acceptable | | EZ |
| 10 | NG | NG | non acceptable | | NG |
| 11 | EZ | EZ | non acceptable | | NG |
| 12 | EZ | PG | non acceptable | | EZ |
| 13 | PG | PG | non acceptable | | EZ |
| 14 | PG | EZ | non acceptable | | EZ |

Supposons que eO₂^{*f*} appartienne à
- un état "NG" de la variable floue eO₂^{*f*} avec un degré d'appartenance de 0,25, et
- un état "EZ" de la variable floue dO₂^{*f*} avec un degré d'appartenance de 0,75,
que dO₂^{*f*} appartienne à
- un état "EZ" de la variable floue dO₂^{*f*} avec un degré d'appartenance de 0,25, et
- un état "PG" de la variable floue dO₂^{*f*} avec un degré d'appartenance de 0,75, et
que NOx appartienne à l'état "non acceptable".

Les moyens 56 appliquent les règles 1 à 14 de la manière suivante pour déterminer l'ordre de commande à appliquer aux débitmètres 21 et 23 selon la logique floue.

Tout d'abord, les moyens 63 ne considèrent que les règles concernées, c'est-à-dire dans l'exemple présent, les règles N° 11 et 12.

Ensuite, on applique un ordre de sélection "MIN-MAX". Cet ordre consiste à affecter dans un premier temps un degré d'appartenance à une variation du facteur stoechiométrique "NG", "EZ", ou "PG" égal au minimum des degrés d'appartenance des états desdites variables floues qui sont à considérer pour cette règle déterminée.

Dans l'exemple présent, en appliquant par exemple la règle N° 11, on obtient que dn doit être dans un état NG avec un degré d'appartenance égal au MIN (0,75; 0,25) = 0,25.

De manière analogue, on obtient par l'application de la règle N° 12 que dn doit être dans un état EZ avec un degré d'appartenance égal à MIN (0,75; 0,75) = 0,75.

Comme résultat final des degrés d'appartenance des états respectifs de l'ordre de commande obtenu selon la logique floue, on considère dans un second temps le maximum d'appartenance obtenu pour chaque état, à savoir dans l'exemple présent, 0,25 pour l'état NG, 0,75 pour l'état EZ et 0 pour l'état PG.

Ensuite, pour l'ordre de commande, on applique celui qui correspond à l'état ayant obtenu le maximum d'appartenance, c'est-à-dire dans le cas présent "EZ". Cela signifie que pour ce cycle de régulation, le régulateur à logique floue va maintenir constant le facteur stoechiométrique entre le combustible et le comburant injectés dans la chambre de combustion 3.

Bien entendu, le jeu de règles et les variables prises en compte dans ce jeu ne constituent qu'un exemple simplifié. Ce procédé permet de prendre en compte de la même manière une multitude d'autres variables comme par exemple la température de voûte et la variation de la température de voûte en ce qui concerne les variables principales, et la teneur en monoxyde de carbone, la température de paroi du four, la teneur en azote du carburant ou la teneur en oxygène du comburant en ce qui concerne les variables secondaires.

Ainsi, on comprend que la prise en compte des variables secondaires telles que par exemple la teneur en oxydes d'azote des fumées en sortie du four et plus particulièrement l'utilisation de la logique floue permettent d'affiner considérablement la régulation d'une oxy-combustion d'un four et de mieux répondre aux contraintes et perturbations auxquelles le fonctionnement d'un tel four est soumis.

## Revendications

1. Procédé de combustion d'un combustible avec un comburant dont la teneur en oxygène est supérieure à 25 % en moles, dans une chambre de combustion (3), dans lequel, de façon cyclique :
- on mesure au moins une variable principale représentative de la combustion dans ladite chambre de combustion (3),
- en fonction du résultat de mesure de ladite au moins une variable principale, on détermine un ordre de commande de régulation des débits de combustible et de comburant à injecter dans ladite chambre de combustion (3), et
- on applique ledit ordre de commande de régulation pour faire brûler le combustible avec le comburant dans ladite chambre (3),
**caractérisé en ce que**
- on mesure en outre au moins une variable secondaire associée à une contrainte de fonctionnement de ladite chambre de combustion (3) ou à une perturbation dans le fonctionnement de celle-ci, et
- pour la détermination dudit ordre de commande de régulation, on prend également en compte le résultat de mesure de ladite au moins une variable secondaire,
et **en ce que** l'ordre l'ordre de commande de régulation est déterminé par un régulateur à logique floue (50) mettant en oeuvre les étapes consistant à :
- convertir chaque variable principale ou secondaire en vue d'établir son degré d'appartenance à au moins un état d'une variable floue,
- appliquer des règles préétablies entre au moins un état d'une première variable floue et un état d'une seconde variable floue pour déterminer un ordre de commande de régulation des débits de combustible et de comburant à injecter dans ladite chambre de combustion, et
- appliquer ledit ordre de commande de régulation pour faire brûler le combustible avec le comburant dans ladite chambre (3).

2. Procédé selon la revendication 1, **caractérisé en ce que** ladite au moins une variable associée à une contrainte de fonctionnement de ladite chambre est une variable du groupe suivant : la teneur en oxydes d'azote des fumées en sortie de la chambre de combustion (3), la teneur en monoxyde de carbone des fumées en sortie de la chambre de combustion (3) et une température de paroi de ladite chambre de combustion (3).

3. Procédé selon la revendication 1 ou 2, **caractérisé en ce que** ladite au moins une variable associée à une perturbation de fonctionnement de ladite chambre de combustion (3) est une variable du groupe suivant la teneur en azote du combustible, la teneur en oxygène du comburant et l'état de fonctionnement d'au moins un brûleur de ladite chambre de combustion.

4. Procédé selon l'une quelconque des revendications 1 à 3, **caractérisé en ce que** l'on mesure plusieurs variables secondaires associées à des contraintes de fonctionnement de ladite chambre de combustion (3) et/ou à des perturbations dans le fonctionnement de celle-ci, et, pour la détermination dudit ordre de commande de régulation, on prend en compte le résultat de mesure de chaque variable secondaire.

5. Procédé selon l'une des revendications 1 à 4, **caractérisé en ce que** les variables floues d'entrée sont établies à partir de courbes définies sur tout l'univers de discours des variables principales et secondaires.

## Patentansprüche

1. Verbrennungsverfahren eines Brennstoffes mit einem Oxidationsmittel, dessen Sauerstoffgehalt mehr als 25 Mol-% beträgt, in einer Brennkammer (3), wobei periodisch
- mindestens eine Hauptvariable gemessen wird, die für die Verbrennung in der Brennkammer (3) charakteristisch ist,
- je nach dem Messergebnis der mindestens einen Hauptvariablen ein Steuerbefehl zur Regulierung der in die Brennkammer (3) einzuspritzenden Brennstoff- und Oxidationsmitteldurchsätze bestimmt wird, und
- der Steuerbefehl zur Regulierung angewendet wird, um den Brennstoff mit dem Oxidationsmittel in der Kammer (3) zu entflammen,
**dadurch gekennzeichnet, dass**
- außerdem mindestens eine Nebenvariable gemessen wird, die mit einer Betriebsbedingung der Brennkammer (3) und einer Betriebsstörung dieser Brennkammer verknüpft ist, und
- zur Bestimmung des Steuerbefehls zur Regulierung auch das Messergebnis der mindestens einen Nebenvariablen berücksichtigt wird,
und dadurch, dass der Steuerbefehl zur Regulierung durch einen Fuzzy-Logik-Regler (50) bestimmt wird, indem die Schritte ausgeführt werden, die aus dem Folgenden bestehen:
- Umsetzen jeder Haupt- oder Nebenvariablen mit der Absicht zu ermitteln, inwieweit sie zu dem mindestens einen Zustand einer unscharfen Variablen gehört,
- Anwenden vorherbestimmter Regeln zwischen mindestens einem Zustand einer ersten unscharfen Variablen und einem Zustand einer zweiten unscharfen Variablen, um einen Steuerbefehl zur Regulierung der in die Brennkammer einzuspritzenden Brennstoff- und Oxidationsmitteldurchsätze zu bestimmen, und
- Anwenden des Steuerbefehls zur Regulierung, um den Brennstoff mit dem Oxidationsmittel in der Kammer (3) zu entflammen.

2. Verfahren nach Anspruch 1, **dadurch gekennzeichnet, dass** die mindestens eine Variable, die mit einer Betriebsbedingung der Kammer verknüpft ist, eine Variable der folgenden Gruppe ist: Stickoxidgehalt der Gase am Ausgang der Brennkammer (3), Kohlenmonoxidgehalt der Gase am -Ausgang der Brennkammer (3) und Wandungstemperatur der Brennkammer (3).

3. Verfahren nach Anspruch 1 oder 2, **dadurch gekennzeichnet, dass** die mindestens eine Variable, die mit einer Betriebsstörung der Brennkammer (3) verknüpft ist, eine Variable der folgenden Gruppe ist: Stickstoffgehalt des Brennstoffes, Sauerstoffgehalt des Oxidationsmittels und Betriebszustand mindestens eines Brenners der Brennkammer.

4. Verfahren nach einem der Ansprüche 1 bis 3, **dadurch gekennzeichnet, dass** mehrere Nebenvariablen gemessen werden, die mit Betriebsbedingungen der Brennkammer (3) und/oder Betriebsstörungen dieser Brennkammer verknüpft sind, und dass zur Bestimmung des Steuerbefehls zur Regulierung das Messergebnis jeder Nebenvariablen berücksichtigt wird.

5. Verfahren nach einem der Ansprüche 1 bis 4, **dadurch gekennzeichnet, dass** die unscharfen Eingangsvariablen aus Kurven ermittelt werden, die in dem ganzen Diskursbereich der Haupt- und Nebenvariablen definiert sind.

## Claims

1. Process for combustion of a fuel with an oxidant whose oxygen level is more than 25 mol%, in a combustion chamber (3), in which, cyclically:
- at least one principal variable representing the combustion in the said combustion chamber (3) is measured,
- as a function of the result of the measurement of the said at least one principal variable, a control instruction for regulating the flowrates of fuel and oxidant to be injected into the said combustion chamber (3) is determined, and
- the said regulating control instruction is applied in order to make the fuel burn with the oxidant in the said chamber (3),
**characterized in that**
- at least one secondary variable associated with an operational constraint of the said combustion chamber (3) or with a perturbation in the operation of the latter is additionally measured, and
- for the determination of the said regulating control instruction, the result of the measurement of the said at least one secondary variable is also taken into account,
and **in that** the regulating control instruction is determined by a fuzzy-logic controller (50) employing the steps consisting in:
- converting each principal or secondary variable with a view to establishing its degree of membership in at least one state of a fuzzy variable,
- applying pre-established rules between at least one state of a first fuzzy variable and a state of a second fuzzy variable in order to determine a control instruction for regulating the flowrates of fuel and oxidant to be injected into the said combustion chamber, and
- applying the said regulating control instruction to make the fuel burn with the oxidant in the said chamber (3).

2. Process according to Claim 1, **characterized in that** the said at least one variable associated with an operational constraint of the said chamber is a variable in the following group: the level of nitrogen oxides in the outlet fumes from the combustion chamber (3), the level of carbon monoxide in the outlet fumes from the combustion chamber (3) and a wall temperature of the said combustion chamber (3).

3. Process according to Claim 1 or 2, **characterized in that** the said at least one variable associated with an operational perturbation of the said combustion chamber (3) is a variable in the following group: the nitrogen level of the fuel, the oxygen level of the oxidant and the operational state of at least one burner of the said combustion chamber.

4. Process according to any one of Claims 1 to 3, **characterized in that** a plurality of secondary variables associated with operational constraints of the said combustion chamber (3) and/or with perturbations in the operation of the latter are measured and, for the determination of the said regulating control instruction, the measurement result of each secondary variable is taken into account.

5. Process according to one of Claims 1 to 4, **characterized in that** the input fuzzy variables are established on the basis of curves defined throughout the universal set of the principal and secondary variables.
